# EUROPÄISCHE PATENTSCHRIFT

(11) **EP 3 283 780 B1**
(45) Veröffentlichungstag und Bekanntmachung des Hinweises auf die Patenterteilung: **20.02.2019**
(21) Anmeldenummer: 16724274.2
(22) Anmeldetag: 15.04.2016
(51) Int. Cl.: F16C 1/10, E05B 79/20, E05B 79/02, E05B 85/02

(54) **BOWDENZUGANBINDUNG FÜR EIN KRAFTFAHRZEUGSCHLOSS**
BOWDEN CABLE CONNECTION FOR A MOTOR VEHICLE LOCK
ATTACHEMENT DE CÂBLE DE COMMANDE POUR UNE SERRURE DE VÉHICULE AUTOMOBILE

(30) Priorität: 16.04.2015 DE 102015004766
(43) Veröffentlichungstag der Anmeldung: 21.02.2018
(73) Patentinhaber: Kiekert AG, 42579 Heiligenhaus (DE)
(72) Erfinder: HUNDSDORFER, Nikolaus, 40878 Ratingen (DE)
(86) Internationale Anmeldenummer: PCT/DE2016/100178
(87) Internationale Veröffentlichungsnummer: WO 2016/165695

(56) Entgegenhaltungen:
- EP-A2- 0 260 900
- DE-A1- 3 441 716
- DE-A1-102004 002 755
- DE-A1-102013 009 225
- DE-A1-102013 203 166
- US-A- 5 590 567

## Beschreibung

Die Erfindung betrifft eine Vorrichtung zur axialen Festlegung eines Endes eines Bowdenzugs, insbesondere ein Kraftfahrzeugschloss, aufweisend ein Gehäuse, einen Bowdenzug, wobei das Gehäuse eine Aufnahme aufweist, in der das Ende des Bowdenzuges festlegbar ist.

Bowdenzüge sind allgemein bekannt und seit vielen Jahren in unterschiedlichen technischen Gebieten im Einsatz. Ein Bowdenzug umfasst dabei einen in einem Kunststoffmantel geführten biegsamen Draht, wobei der Kunststoffmantel an seinen entgegengesetzten Enden zumeist einen Bund aufweist, der in einer Halterung, einem Gehäuse oder einer Aufnahmevorrichtung aufgenommen ist.

Bowdenzüge eignen sich insbesondere zur Übertragung von Zugkräften, wobei das Antriebsmittel entfernt vom eigentlichen Auslösemechanismus angeordnet werden kann. In vorteilhafter Weise kann mittels des Bowdenzugs eine Kraft über eine große Entfernung ausgeübt werden, wobei zusätzlich ein Vorteil darin besteht, dass die zu übertragende Kraft umlenkbar ist. Dazu sind der Draht, der auch als Bowdenzugseele bezeichnet wird, wie auch der die Bowdenzugseele umgebende Kunststoffmantel vorzugsweise flexibel ausgeführt.

Bevorzugt weisen Bowdenzüge an den jeweiligen Enden des Kunststoffmantels eine entsprechende Formgebung auf, so dass die Enden des Kunststoffmantels fixierbar bzw. festlegbar sind. Neben dem die Bowdenzugseele umgebenden Kunststoffmantel können noch weitere Kunststoffüberzüge, wie auch Dichtungsmittel, wie beispielsweise eine Dichtmanschette, am Kunststoffmantel angeordnet sein, um den entsprechenden Anforderungen zu entsprechen.

Aus der DE 10 2013 009 225 A1 ist ein Schloss für ein Kraftfahrzeug umfassend einen Bowdenzug und eine Aufnahme für den Bowdenzug bekannt. Neben den im Gehäuse des Kraftfahrzeugschlosses angeordneten Führungen für den Bowdenzug weist das Kraftfahrzeugschloss ein als separates Aufnahmeelement ausgebildetes Aufnahmeelement auf, in das ein Ende des Mantels des Bowdenzugs einlegbar und festlegbar ist. Das Aufnahmeelement selbst weist eine Zentrier- und Montagesicherung auf und umfasst weiterhin angefaste Einführbereiche, die ein Montieren des Bowdenzugs erleichtern sollen.

Die Verwendung eines Bowdenzugs ist darüber hinaus aus der DE 10 2004 002 755 A1 bekannt. Offenbart ist ein Fahrzeugschloss, in dem Funktionselemente, wie beispielsweise eine Innenbetätigung oder eine Außenbetätigung mittels eines Bowdenzugs betätigt werden. Ein Ende des Bowdenzugs ist in einem Lager eines Gehäuses des Kraftfahrzeugschlosses aufgenommen und fixiert, das Gehäuse legt somit den Bowdenzug in Bezug auf das Kraftfahrzeugschloss fest. Zur Fixierung weist das Ende des Bowdenzugs zwei umlaufende Bünde auf, die in Nuten des Gehäuses einführbar sind. Ein sicheres Positionieren bzw. Festlegen des Bowdenzugs kann somit gewährleistet werden und eine Kraft auf die Funktionselemente im Kraftfahrzeugschloss übertragen werden.

Aus der DE 34 41 716 A1 ist ein Halteblock zur Aufnahme eines Bowdenzugs bekannt, wobei der Bowdenzug einen Bund umfasst, der in einer Ausnehmung des Halteblocks gehalten und festlegbar ist. Zur Montage des Bowdenzugs im Halteblock wird der Bowdenzug bzw. der Bund in einen Raum des Halteblocks eingeführt, wobei eine Federzunge federnd bewegt werden muss, um den Bowdenzug in seine Endposition zu überführen. Die Federzunge weist eine Anlaufschräge auf, die einerseits ein leichteres Montieren ermöglicht und andererseits als Anschlagfläche zur Fixierung des Endes des Mantels im Halteblock dient. Die Federzunge kann gegen ein Ende des Kunststoffmantels wirken, sie kann aber in einer alternativen Ausführungsform ebenso gegen den Bund gerichtet sein und ein Fixieren bzw. Festlegen des Bowdenzugs in Richtung des Endes des Bowdenzugs ermöglichen.

US 5 590 567 A offenbart die Merkmale des Oberbegriffs von Anspruch 1.

Ein Problem, das sich bei den bekannten Vorrichtungen zur axialen Festlegung eines Endes eines Bowdenzugs einstellen kann, ist das, dass es zu einer fehlerhaften Montage des Bowdenzugs kommen kann.

Je nach Montage des Bowdenzugs kann der Bund des Bowdenzugs beispielsweise in eine falsche Nut im Gehäuse eingeführt werden oder aber gegen das Gehäuse selbst montiert werden. In einem derartigen Fall wäre der Bowdenzug bzw. die Bowdenzugseele nicht wie konstruktiv vorgegeben in Bezug auf weitere Funktionselemente ausgerichtete und würde beispielsweise das Funktionselement unter Vorspannung setzen. Eine Vorspannung im Bereich der Funktionselemente könnte wiederum Fehlfunktionen bedingen.

Darüber hinaus könnte eine fehlerhafte Montage des Bowdenzugs dazu führen, dass der Bowdenzug aus seiner Montagelage herausrutscht und somit ein undefinierter Zustand eintritt, was Beschädigungen oder eine Funktionsuntüchtigkeit zur Folge haben könnte.

Aufgabe der Erfindung ist es, eine verbesserte Vorrichtung zur axialen Festlegung eines Endes eines Bowdenzugs und insbesondere ein verbessertes Kraftfahrzeugschloss bereitzustellen. Darüber hinaus ist es Aufgabe der Erfindung, eine Möglichkeit zu schaffen, mit der es gelingt, dass ein fehlerhaftes Montieren des Bowdenzugs nicht eintreten kann, wie auch eine konstruktiv einfache und kostengünstige Lösung bereitzustellen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben. Es wird darauf hingewiesen, dass die im Folgenden beschriebenen Ausführungsbeispiele nicht beschränkend sind, es sind vielmehr beliebige Variationsmöglichkeiten der in der Beschreibung und den Unteransprüchen sowie der Zeichnung beschriebenen Merkmale möglich. Auch wenn in dem Ausführungsbeispiel bevorzugt ein Kraftfahrzeugschloss dargestellt ist, so ist die Erfindung nicht auf diesen Einsatz beschränkt, sondern richtet sich darüber hinaus auch auf Vorrichtungen, die eine Aufnahme für einen Bowdenzug aufweisen und bei denen es im Rahmen der Montage zu einer Fehlmontage kommen kann.

Gemäß dem Patentanspruch 1 wird die Aufgabe der Erfindung dadurch gelöst, dass eine Vorrichtung zur axialen Festlegung eines Endes eines Bowdenzugs, insbesondere ein Kraftfahrzeugschloss, bereitgestellt wird, aufweisend ein Gehäuse einen Bowdenzug, wobei das Gehäuse eine Aufnahme aufweist, in der das Ende des Bowdenzugs festlegbar ist und wobei das Gehäuse ein Mittel zum Einführen des Bowdenzugs in die Aufnahme aufweist, so dass eine fehlerhafte Montage des Bowdenzugs unterbindbar ist. Durch den Einsatz eines Mittels zum Einführen des Bowdenzugs in die Aufnahme ist nun die Möglichkeit geschaffen, ein fehlerhaftes Montieren des Bowdenzugs zu verhindern. Insbesondere kann mittels der Einführhilfe der Bowdenzug nur in die für den Bowdenzug vorgesehene Aufnahme eingeführt werden, so dass eine Fehlmontage bzw. eine daraus resultierende Fehlfunktion unterbindbar und vermeidbar ist. Das Mittel zum Einführen bedingt dabei, dass der Bowdenzug bzw. das in die Vorrichtung eingelegte Ende des Bowdenzugs nur in die für den Bowdenzug vorgesehene Aufnahme gelangen kann, so dass ein hohes Maß an Sicherheit gewährleistet werden kann.

Auch wenn als ein bevorzugtes Ausführungsbeispiel ein Schloss für ein Kraftfahrzeug genannt ist, so beschränkt sich die Erfindung nicht auf eine Anwendung im Bereich der Kraftfahrzeuge, sondern kann auch bei jeder anderen Art von Vorrichtung eingesetzt werden, in der ein Bowdenzug mit einem Gehäuse verbunden wird und wobei die Gefahr besteht, dass durch ein fehlerhaftes Einbauen bzw. Montieren des Bowdenzugs es zu einer Fehlbetätigung kommen kann.

Als Gehäuse kann hierbei natürlich ebenfalls auch lediglich ein Teil einer gesamten Maschine und/oder eine Halterung für eine Bowdenzugaufnahme dienen. Dabei ist es wesentlich für die Erfindung, dass das Gehäuse eine Aufnahme aufweist, mit der das Ende des Bowdenzugs festlegbar bzw. positionierbar ist. Vorzugsweise weist der Bowdenzug ein Ende eines Mantels auf, der sich gegen die Aufnahme im Gehäuse abstützt, so dass eine Zug- und/oder Druckbewegung durch die Bowdenzugseele übertragbar ist. Der Bowdenzugmantel wird dabei durch die Aufnahme fixiert, so dass der Bowdenzugmantel unabhängig von der Bewegung der Bowdenzugseele fixiert bzw. festgelegt ist.

Das Mittel zum Einführen des Bowdenzugs dient dabei dazu, dass das Ende des Bowdenzugs von einem Monteur nicht fehlerhaft montiert werden kann. Vorzugsweise wird der Bowdenzug durch einen Einführschlitz, der zumindest eine Weite aufweist, dass die Bowdenzugseele hindurchführbar ist, in das Gehäuse bzw. die Aufnahme eingeführt und mit dem Bowdenzugmantel gegen die Aufnahme angelegt. Der Bowdenzugmantel erfährt durch die Aufnahme somit ein Widerlager, so dass ein Verschieben des Bowdenzugmantels bei einer Betätigung der Bowdenzugseele unterbindbar ist. Bevorzugt weist der Bowdenzugmantel an seinem Ende einen Bund, das heißt eine Durchmesserveränderung, insbesondere eine Vergrößerung des Durchmessers, auf, die zumindest bereichsweise in die Aufnahme einführbar ist, um eine zusätzliche Lagerung des Bowdenzugs zu gewährleisten.

Das Mittel zum Einführen verhindert dabei, dass es zu einer fehlerhaften Montage des Bowdenzugmantels in Bezug auf das Gehäuse der Vorrichtung kommen kann.

Weist das Gehäuse eine Öffnung zur Aufnahme des Bowdenzugs auf und ist das Mittel zum Einführen aus einer einen Formschluss zwischen Bowdenzug und Öffnung verhinderten Form gebildet, so ergibt sich eine bevorzugte Ausführungsform der Erfindung. Wird die Aufnahme des Bowdenzugs durch einen Formschluss verhindert, so ist es dem Monteur, der bevorzugt den Bowdenzug in das Gehäuse bzw. die Aufnahme hineinmontiert, nicht möglich, den Bowdenzug fehlerhaft in die Aufnahme einzulegen. Dabei verhindert die Form das Montieren des Bowdenzugs in einer fehlerhaften Position, so dass ein fehlerhaftes Montieren des Bowdenzugs unterbindbar ist.

Vorteilhafterweise ist ein Mittel zum Verhindern eines fehlerhaften Montierens bzw. Einführens als Formschlusssicherung leicht herstellbar und somit kostengünstig zu realisieren. Dabei kann der Formschluss einerseits das fehlerhafte Einführen in das Gehäuse wie auch eine fehlerhafte Positionierung in der Aufnahme verhindern. Dabei kann der Bowdenzug durch die Form bedingt nicht fehlerhaft, das heißt an einer nicht dafür vorgesehenen Position eingelegt bzw. festgelegt werden, wodurch einerseits ein Funktionieren des montierten Bowdenzugs gewährleistet werden kann und darüber hinaus Fehlfunktionen unterbunden werden.

In einer bevorzugten Ausführungsform der Erfindung ist das Mittel zum Einführen aus einer einen Formschluss zwischen Bowdenzug und Öffnung verhinderten Gehäuseform gebildet. Das Gehäuse der Vorrichtung kann aus Metall oder Kunststoff bestehen. In einer bevorzugten Ausführungsform ist das Gehäuse als Spritzgussbauteil und aus Kunststoff gefertigt. Ein bevorzugter Werkstoff ist dabei ein Polyoxymethylen (POM), mit oder ohne zusätzlichen Additiven. Sind die Mittel zum Einführen, die den Formschluss am Gehäuse verhindern, unmittelbar am Gehäuse ausgebildet, so ist auch unter Verwendung des bevorzugten Kunststoffs eine kostengünstige Herstellung möglich.

Dabei kann die zusätzlich an das Gehäuse angebrachte Form als separates Bauteil oder unmittelbar einstückig an das Gehäuse angeformt sein. Vorteilhaft hieran ist, dass mit standardisierten Bowdenzügen gearbeitet werden kann, was wiederum sich positiv auf die Kosten auswirkt. Bevorzugt sind Aufnahme und Gehäuse zumindest bereichsweise beabstandet voneinander angeordnet, so kann das Mittel zum Einführen zum Beispiel unmittelbar an das Gehäuse angeformt oder angebracht sein und die Aufnahme als separates Bauteil oder wiederum einstückig mit dem Gehäuse ausgebildet sein. Dabei dient das Mittel zum Einführen dazu, den Bowdenzug zu führen und zwar derart, dass ein Montieren unmittelbar am Gehäuse, das heißt beabstandet von der Aufnahme verhindert bzw. vollständig unterbindbar ist. Dabei kann die Form des Gehäuses derart ausgebildet sein, dass ein Festlegen bzw. Fixieren des Endes des Bowdenzugs derart unterbunden sind, dass der Bowdenzug nicht am Gehäuse fixierbar ist. Darüber hinaus kann die am Gehäuse ausgebildete Form einerseits ein fehlerhaftes Montieren verhindern und gleichzeitig zum Beispiel als Stütze für den Bowdenzug bzw. als Führung für den montierten Bowdenzug dienen.

Kann einerseits die Aufnahme beabstandet vom Gehäuseende, das heißt dem Bereich, in den der Bowdenzug durch eine Öffnung im Gehäuse eingeführt beabstandet sein, so ist es ebenfalls vorstellbar, dass der Bowdenzug unmittelbar in das Gehäuseende, das heißt die Öffnung im Gehäuse eingelegt wird. Das heißt, das Gehäuseende bildet gleichzeitig die Aufnahme für den Bowdenzug. Dabei kann das Ende des Bowdenzugs unmittelbar am Gehäuse anliegen, wobei die Mittel zum Einführen in die Aufnahme beispielsweise aus dem Gehäuse herausragen und somit ein fehlerhaftes Positionieren zwischen Aufnahme und Bowdenzugmantel verhindern.

In einer weiteren bevorzugten Ausführungsform ist das Mittel zum Einführen aus einer einen Formschluss zwischen Bowdenzug und Öffnung verhindernden Bowdenzugform gebildet. Neben einer Formgebung am Gehäuse kann natürlich ebenfalls eine entsprechende Form am Bund des Mantels des Bowdenzugs ausgebildet sein, die ein fehlerhaftes Einführen in die Öffnung bzw. in die Aufnahme verhindert. Dabei kann beispielsweise ein Bund oder zwei oder mehr Bünde am Mantel des Bowdenzugs ausgebildet sein, die ein Einführen aufgrund ihrer Form am Gehäuse verhindern und sich lediglich derart positionieren lassen, dass der Bowdenzug lediglich in die dafür vorgesehene Position in der Aufnahme der Vorrichtung einlegbar ist.

Ist das Mittel zum Einführen zumindest bereichsweise am Umfang der Öffnung angeordnet, so ergibt sich eine weitere Ausführungsform der Erfindung. Bevorzugt ist am Gehäuse der Vorrichtung eine Öffnung vorgesehen, in die der Kunststoffmantel des Bowdenzugs einlegbar ist. Darüber hinaus weist der Kunststoffmantel des Bowdenzugs ein Ende auf, von dem beabstandet ein Bund am Mantel ausgebildet sein kann. Der Bowdenzugmantel kann in die Öffnung eingelegt werden, wobei das Ende des Mantels und/oder der Bund in eine Aufnahme zur Fixierung und lagegenauen Positionierung einführbar bzw. festlegbar ist. Die Aufnahme dient dabei dazu, den Bowdenzug ordnungsgemäß zu positionieren, um eine Funktion des Bowdenzugs bzw. der daran angeschlossenen Mechanismen zu gewährleisten. Ist nun das Mittel zum Einführen am Umfang der Öffnung angeordnet, so kann ein fehlerhaftes Montieren des Bowdenzugmantels in Bezug auf das Gehäuse vermieden werden. Die Anordnung am Umfang der Öffnung ist dahingehend vorteilhaft, da die Gefahr besteht, dass das Ende des Mantels oder der Bund gegen das Ende des Gehäuses, das heißt den Bereich der Öffnung ebenfalls anlegbar ist.

Wird gemäß der Erfindung ein Mittel zum Einführen unmittelbar am Umfang der Öffnung angeordnet, so kann verhindert werden, dass der Bund bzw. das Ende des Mantels an der Öffnung des Gehäuses zur Anlage kommt. Im einfachsten Fall kann zum Beispiel eine stiftförmige, zylinderförmige und/oder kegelförmige Erhöhung am Rand bzw. Umfang der Öffnung angeordnet sein, so dass das Ende des Mantels und/oder der Bund von der Öffnung abgeleitet wird bzw. von der Erhöhung abrutscht. Der Bediener bzw. Monteur erfährt somit haptisch wie auch visuell die Rückmeldung, dass der Bowdenzug nicht positionierbar ist, wodurch ein fehlerhaftes Einführen bzw. Festlegen des Bowdenzugs verhinderbar ist.

Ist die Öffnung im Gehäuse U-förmig ausgebildet und das Mittel zum Ausführen aus einer sich entlang des Umfangs erstreckenden Erhöhung gebildet, so ergibt sich eine weitere Ausführungsform der Erfindung. Eine U-förmige Öffnung im Gehäuse bietet den Vorteil, dass die Weite der U-förmigen Öffnung auf den Kunststoffmantel des Bowdenzugs abstimmbar ist, so dass nicht nur ein Einführen des Bowdenzugs in das Gehäuse der Vorrichtung möglich wird, sondern dass die Öffnung den Bowdenzug gleichzeitig stützt bzw. in der Lage stabilisieren kann. In vorteilhafter Weise ist die Öffnung in einer Breite ausgeführt, dass ein Monteur den Mantel spielfrei in die Öffnung einführen bzw. einschieben kann. Die Aufnahme kann beabstandet zur Öffnung im Gehäuse der Vorrichtung angeordnet sein. Erstreckt sich hierbei das Mittel zum Einführen entlang des Umfangs, so kann auch ein lediglich bereichsweises Lagern des Endes des Bowdenzugmantels bzw. eines Bundes am Gehäuse bzw. der Öffnung am Gehäuse verhindert werden.

In einer Ausführungsform der Erfindung ist die Erhöhung ausgehend von einem Ende der U-förmigen Gehäuseöffnung ansteigend und zum gegenüberliegenden Ende der U-förmigen Gehäuseöffnung abfallend ausgebildet, so dass die Erhöhung eine Schräge bildet. Eine Schräge, die an der Gehäuseöffnung angebracht bzw. die auch einstückig am Gehäuse ausgebildet sein kann, bietet den Vorteil, dass der Kunststoffmantel des Bowdenzugs an der Schräge abgleitet, so dass ein Monteur, der den Bowdenzug mit dem nicht für die Öffnung versehenen Bereich am Gehäuse montieren möchte, unmittelbar eine Rückmeldung erfährt, dass eine Montage verhindert wird. Vielmehr wird der Bowdenzug derart geleitet, dass die Schräge als Montagehilfe dient. Neben einer Sicherungsfunktion des Mittels zum Einführen dient die an der Öffnung ausgebildete Schräge somit als Montagehilfe, die ein Montieren erleichtert und den Bowdenzugmantel bzw. den Bund oder das Ende des Mantels zielgerichtet in Richtung der Aufnahme leitet, so dass der Monteur den Bowdenzug leichter, schneller und lagegerecht in die Aufnahme bringen und montieren kann. Bevorzugt ist die Einführschräge einstückig mit dem Gehäuse ausgebildet und als Spritzgussbauteil ausgeformt. Dabei erstreckt sich die Schräge bevorzugt unmittelbar am Umfang der Öffnung, so dass bei einer Ausbildung der Öffnung sowie der sich entlang der Öffnung erstreckenden Schräge eine zusätzliche Stütze für den Bowdenzugmantel bereitgestellt wird.

Ist darüber hinaus ein Bund am Ende des Kunststoffmantels des Bowdenzugs ausgebildet, so gelangt der Bund beim Montieren zuerst in Kontakt mit der Schräge, wobei die Schräge den Bund in Richtung des Einführschlitzes, das heißt die Öffnung zur Einführung des Bowdenzugmantels leitet. Der Bund wird in Richtung der Aufnahme geführt und kann in die Aufnahme aber nicht in der Öffnung zur Anlage kommen. Dabei ist die Schräge derart ausgebildet, dass der Bowdenzugmantel bzw. der Bund so weit von der Aufnahme beabstandet ist, dass dem Bediener bzw. Monteur unmittelbar ersichtlich ist, dass ein Einhängen der Bowdenzugseele bzw. ein Ende der Bowdenzugseele in eine Funktionseinheit der Vorrichtung nicht möglich bzw. dass bei einem Einhängen der Bowdenzugseele, wodurch der Bowdenzug zumindest bereichsweise gespannt wird, von der Schräge abrutscht bzw. abgleitet, wodurch ein fehlerhaftes Montierten unterbunden wird.

In einer Ausführungsform ist das Gehäuse aus Kunststoff, insbesondere aus Polyoxymethylen (POM), gebildet und das Mittel zum Einführen einstückig mit dem Gehäuse ausgebildet. Die Ausbildung des Gehäuses aus Kunststoff bietet den Vorteil, dass das Gehäuse leicht ist, die Öffnung, das Mittel zum Einführen und die Aufnahme leicht ausbildbar sind und darüber hinaus eine kostengünstige Vorrichtung herstellbar ist. Insbesondere ist eine Erhöhung in Form einer Schräge leicht an die Vorrichtung bzw. das Gehäuse anformbar. Polyoxymethylen ist ein gängiger und somit kostengünstig zur Verfügung stehender Werkstoff, der darüber hinaus auch die Anforderungen der Automobilindustrie erfüllt, dass der Einsatz im Bereich der Kraftfahrzeugschlösser heute zum Standard gehört.

Bevorzugt ist das Gehäuse ein Teil eines Kraftfahrzeugschlosses und der Bowdenzug an eine Innenbetätigung, eine Außenbetätigung und/oder eine Zuziehhilfe für das Kraftfahrzeugschloss angeschlossen. Die Bowdenzugseele ist dann mit einem Betätigungshebel oder einer Zuziehfunktion im Kraftfahrzeugschloss verbunden.

Weist der Bowdenzug einen Bowdenzugmantel auf und umfasst der Bowdenzugmantel einen Bund, wobei der Bund in die Aufnahme zumindest bereichsweise einführbar ist, so ergibt sich eine weitere Ausführungsform der Erfindung. Mittels eines Bunds, das heißt einem Bereich des Kunststoffmantels, der einen vergrößerten Durchmesser in Bezug auf den Manteldurchmesser aufweist, ist eine vergrößerte Anlagefläche in der Aufnahme herstellbar, so dass eine Kraftübertragung zwischen Bowdenzugmantel und Aufnahme verbessert werden kann. Darüber hinaus ist es vorteilhaft, wenn der Bund zumindest bereichsweise in die Aufnahme einführbar ist, so dass nicht nur eine axiale Fixierung des Bowdenzugmantels, sondern auch eine radiale Lagersicherung des Bowdenzugendes realisierbar ist. Dabei kann die Aufnahme eine mit dem Durchmesser des Bundes korrespondierende Vertiefung aufweisen, so dass der Bund spielfrei in der Aufnahme festlegbar ist. Der Bowdenzugmantel kann somit in der Aufnahme axial wie auch radial geführt bzw. fixiert sein, wobei das Mittel zum Einführen den Bowdenzugmantel über das Gehäuseende hinaus stabilisieren und lagegerecht positionieren kann.

Ist das Gehäuse zumindest zweiteilig ausgebildet und ist der Bund mittels eines weiteren Gehäuseteils in der Aufnahme festlegbar, so ergibt sich eine weitere Ausführungsform der Erfindung. Wird der Bowdenzugmantel durch die Öffnung, die Mittel zur Einführung und die Aufnahme im Gehäuse fixiert bzw. festgelegt, so benötigt der Bowdenzug bzw. der am Bowdenzug ausgebildete Bund ein Spiel, um in eine Vertiefung in der Aufnahme einführbar zu sein. In diesem Fall dient ein weiteres Gehäuseteil dazu, den Bowdenzug in der Aufnahme zu fixieren. Aber auch ohne eine Vertiefung in der Aufnahme kann mittels eines zweiten Gehäuseteils ein geschlossenes Gehäuse und somit ein Schutz für den Bowdenzug hergestellt werden und zusätzlich eine radiale Sicherung zur Positionierung des Endes des Bowdenzugs herstellbar sein. Bevorzugt ist das Gehäuse ein Gehäuse für ein Kraftfahrzeugschloss und das zweite Bauteil ein Gehäusedeckel für das Kraftfahrzeugschloss. Dienen die Aufnahme und das zweite Gehäuseteil zur weiteren Lagesicherung des Endes des Bowdenzugs, so dient das Mittel zum Einführen des Bowdenzugs bevorzugt dazu, dass eine Fehlmontage des Bowdenzugs im Gehäuse verhindert wird.

Nachfolgend wird die Erfindung unter Bezugnahme auf die anliegenden Zeichnungen anhand eines bevorzugten Ausführungsbeispiels näher erläutert. Es gilt jedoch der Grundsatz, dass das Ausführungsbeispiel die Erfindung nicht beschränkt, sondern lediglich eine vorteilhafte Ausführungsform darstellt. Die dargestellten Merkmale können einzeln oder in Kombination mit weiteren Merkmalen der Beschreibung wie auch den Patentansprüchen einzeln oder in Kombination ausgeführt werden.

Es zeigt:

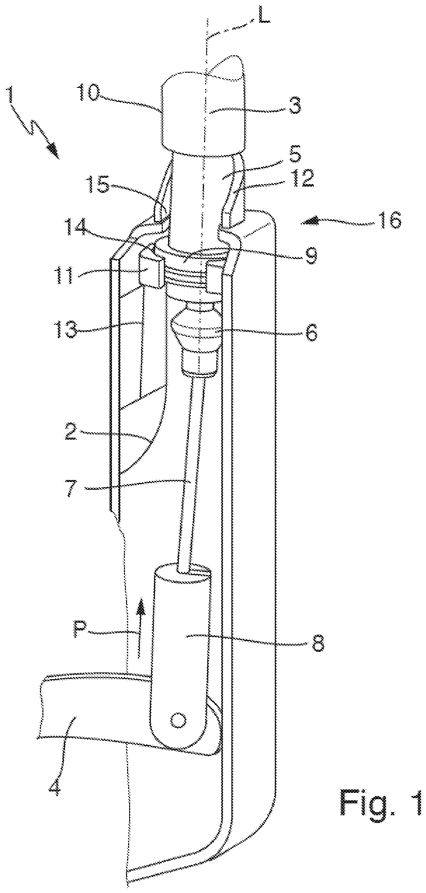

- FIG. 1: eine dreidimensionale Ansicht auf eine Vorrichtung mit einem axial festgelegten Ende eines Bowdenzugs in einer Ausführungsform in einem Kraftfahrzeugschlossgehäuse.

In der FIG. 1 ist eine Vorrichtung 1 aufweisend ein Gehäuse 2, einen Bowdenzug 3 und einen Betätigungshebel 4 dargestellt. Das Gehäuse 2 ist Teil eines zumindest zweiteilig ausgeführten Kraftfahrzeugschlossgehäuses, in dem ein Betätigungshebel 4 schwenkbar gelagert aufgenommen ist. Der Betätigungshebel 4 ist in Richtung des Pfeils P mittels des Bowdenzugs 3 bewegbar.

Der Bowdenzug 3 weist einen Bowdenzugmantel 5, eine Bowdenzugdichtung 6 (Dichtungsmanschette), eine Bowdenzugseele 7 sowie ein schwenkbeweglich mit dem Betätigungshebel 4 verbundenes Verbindungsglied 8 auf. Der Bowdenzug 5 weist ferner einen Bund 9 und eine zusätzliche Ummantelung 10 für den Bowdenzugmantel 5 auf. Das Gehäuse 2 ist aus einem Kunststoff gefertigt und weist eine Aufnahme 11 sowie ein Mittel zum Einführen 12 auf, wobei Aufnahme 11 und Mittel zum Einführen 12 in diesem Ausführungsbeispiel einstückig mit dem Gehäuse 2 ausgebildet sind. Im Gehäuse 2 können weitere Verstärkungsrippen 13 vorgesehen sein.

Der Bund 9 des Bowdenzugmantels 5 weist einen größeren Durchmesser auf, als der Durchmesser des Bowdenzugmantels 5. Die Aufnahme 11 wiederum weist eine Ausnehmung 14 auf, in die der Bund 9 des Bowdenzugmantels 5 eingeführt ist. Die Ausnehmung 14, in die der Bund 9 eingeführt bzw. eingeschoben ist, dient dabei zur radialen Sicherung des Bowdenzugmantels in Bezug auf das Gehäuse 2. Das Mittel zum Einführen 12 umschließt den Bowdenzugmantel 5 zumindest bereichsweise, wobei sich das Mittel zum Einführen 12 entlang der Öffnung 15 erstreckt. Das Mittel zum Einführen 12 erstreckt sich dabei entlang einer Längsachse L des Bowdenzugs 5 und stützt somit den Bowdenzugmantel 5 zusätzlich. In einer Ausführungsform kann sich dabei die Ummantelung 10 zusätzlich am Mittel zum Einführen 12 abstützen. Das heißt, dass in dem Fall, in dem der Bund 9 vollständig in die Ausnehmung 14 der Aufnahme 11 eingeführt ist, liegt die zusätzliche Ummantelung 10 an dem Mittel zur Einführung 12 an.

In die Ausnehmung 14 ist der Bund 9 des Bowdenzugmantels 5 eingeschoben und spielfrei gehalten. In der dargestellten Ausführungsform ist das Mittel zum Einführen 12 am Gehäuse 2 ausgeformt und bildet eine Schräge. Die Schräge erstreckt sich von den Enden der Öffnung 15 entlang des Umfangs der Öffnung 15. Dabei umschließt die Schräge den Bowdenzugmantel 5 zumindest bereichsweise formschlüssig.

Während des Montierens des Bowdenzugs 3 wird der Bowdenzugmantel 5 dem Gehäuse 2 zugeführt, wobei ein Monteur mit dem Bund 9 des Bowdenzugs 3 gegen das Mittel zum Einführen 12 und insbesondere gegen die Schräge stoßen kann. Ein Einlegen des Bowdenzugs am Gehäuse und insbesondere am Mittel zum Einführen 12 kann durch die Schräge verhindert werden, da der Bund 9 von der Schräge abgleitet und nicht fixierbar ist. Erst wenn der Bund 9 in den Einführbereich gelangt, ist es für den Monteur möglich, den Bund in die Aufnahme 11 einzufügen. Das Mittel zum Einführen 12 verhindert somit in wirkungsvoller Weise eine Fehlmontage des Bowdenzugs. Der Bowdenzug 3 ist somit nicht fehlerhaft festlegbar, wodurch ein sicheres Montieren gewährleistet werden kann. Erst in der Anlage in der Aufnahme 11 kann der Bowdenzug 3 betätigt werden, so dass der Betätigungshebel 4 in Richtung des Pfeils P durch ein zum Beispiel Ziehen an der Bowdenzugseele 7 betätigbar ist.

Das dargestellte Ausführungsbeispiel kann beispielsweise ein Gehäuse 2 für ein Kraftfahrzeugschloss sein, und der Betätigungshebel 4 kann zum Beispiel mittelbar auf ein Gesperre im Kraftfahrzeugschloss wirken.

Das dargestellte Ausführungsbeispiel zeigt die Aufnahme eines Bowdenzugs 3 in einem Schlossgehäuse und zwar in lediglich einem Teil des Schlossgehäuses 2. Ein nicht dargestellter Gehäusedeckel weist eine Verlängerung auf, die in den Einführbereich einschiebbar ist, wodurch der Bund 9 des Bowdenzugmantels 5 im Gehäuse 2 gesichert und fixiert wird.

Der Bund 9 am Bowdenzugmantel 5 weist ein axiales Ende des Bowdenzugs 3 auf, das in der Vertiefung 14 der Aufnahme 11 zur Anlage kommt. Die Bowdenzugdichtung 6, wie beispielsweise eine Dichtungsmanschette, kann an einer sich durch die Aufnahme 11 hindurch erstreckendes Verlängerungsstück mit dem Bowdenzug 3 verbunden sein. Derartige Bowdenzugdichtungen 6 sind aus dem Stand der Technik bekannt.

Durch die erfindungsgemäße Ausbildung einer Vorrichtung mit einem Mittel zum Einführen 12 kann ein sicheres Montieren eines Bowdenzugs 3 ermöglicht werden und Fehlmontagen verhindert werden.

### BEZUGSZEICHENLISTE

- 1: Vorrichtung
- 2: Gehäuse
- 3: Bowdenzug
- 4: Betätigungshebel
- 5: Bowdenzugmantel
- 6: Bowdenzugdichtung, Dichtungsmanschette
- 7: Bowdenzugseele
- 8: Verbindungsglied
- 9: Bund
- 10: Ummantelung
- 11: Aufnahme
- 12: Mittel zum Einführen
- 13: Verstärkungsrippen
- 14: Ausnehmung
- 15: Öffnung
- 16: Anbindungsbereich

- P: Pfeil
- L: Längsachse

## Patentansprüche

1. Vorrichtung (1) zur axialen Festlegung eines Endes eines Bowdenzugs (3), insbesondere ein Kraftfahrzeugschloss, aufweisend
• ein Gehäuse (2),
• einen Bowdenzug (3),
• ein Mittel zum Einführen (12) des Bowdenzugs (3) in die Aufnahme (11), so dass eine fehlerhafte Montage des Bowdenzugs (3) unterbindbar ist;
wobei
• das Gehäuse (2) eine Aufnahme (11) aufweist, in der das Ende des Bowdenzugs (3) festlegbar ist,
• das Gehäuse (2) eine Öffnung (15) zur Aufnahme eines Bowdenzugs (3) aufweist;
• das Mittel zum Einführen (12) aus einer einen Formschluss zwischen Bowdenzug (3) und Öffnung (15) verhindernden Form gebildet ist;
• die Öffnung (15) im Gehäuse (2) U-förmig ausgebildet ist und das Mittel zum Einführen (12) aus einer sich entlang des Umfangs erstreckenden Erhöhung gebildet ist;
• der Bowdenzugmantel (5) einen Bund (9) umfasst;
• die Aufnahme (11) eine Ausnehmung (14) aufweist, in die der Bund (9) eingeführt ist;
• die Ausnehmung (14) zur radialen Sicherung des Bowdenzugmantels (5) in Bezug auf das Gehäuse (2) dient;
• das Mittel zum Einführen (12) den Bowdenzugmantel (5) zumindest bereichsweise umschließt;
**dadurch gekennzeichnet, dass**
• die Erhöhung ausgehend von einem Ende der Öffnung (15) ansteigend und zum gegenüberliegenden Ende der Öffnung (15) abfallend ausgebildet ist, so dass die Erhöhung eine Schräge bildet.

2. Vorrichtung (1) nach dem vorigen Anspruch, **dadurch gekennzeichnet, dass** das Mittel zum Einführen (12) aus einer einen Formschluss zwischen Bowdenzug (3) und Öffnung (15) verhindernden Gehäuseform gebildet ist.

3. Vorrichtung (1) nach Anspruch 1, **dadurch gekennzeichnet, dass** das Mittel zum Einführen (12) aus einer einen Formschluss zwischen Bowdenzug (3) und Öffnung (15) verhindernden Bowdenzugform gebildet ist.

4. Vorrichtung nach einem der vorigen Ansprüche, **dadurch gekennzeichnet, dass** das Mittel zum Einführen (12) zumindest bereichsweise am Umfang der Öffnung (15) angeordnet ist.

5. Vorrichtung (1) nach einem der vorigen Ansprüche, **dadurch gekennzeichnet, dass** das Gehäuse (2) aus Kunststoff, insbesondere aus Polyoxymethylen (POM), gebildet ist, und das Mittel zum Einführen (12) einstückig mit dem Gehäuse (2) ausgebildet ist.

6. Vorrichtung nach einem der vorigen Ansprüche, **dadurch gekennzeichnet, dass** der Bowdenzug (3) einen Bowdenzugmantel (5) aufweist, wobei der Bund (9) in die Aufnahme (11) zumindest bereichsweise einführbar ist.

7. Vorrichtung nach dem vorigen Anspruch, **dadurch gekennzeichnet, dass** das Gehäuse (2) zumindest zweiteilig ausgebildet ist und dass der Bund (9) mittels eines weiteren Gehäuseteils in der Aufnahme (11) festlegbar ist.

## Claims

1. Device (1) for the axial fixing of an end of a Bowden cable (3), in particular a motor vehicle lock, having
• a housing (2),
• a Bowden cable (3),
• an inserting means (12) for inserting the Bowden cable (3) into the mounting (11), so that incorrect mounting of the Bowden cable (3) can be prevented;
whereby
• the housing (2) has a mounting (11), in which the end of the Bowden cable (3) can be fixed,
• the housing (2) has an aperture (15) to accommodate a Bowden cable (3);
• the inserting means (12) is formed from a shape which prevents a form fit between the Bowden cable (3) and the aperture (15);
• the aperture (15) in the housing (2) is U-shaped and the inserting means (12) is formed from an elevation extending along the circumference;
• the Bowden cable sheath (5) has a flange (9);
• the mounting (11) has a recess (14) into which the flange (9) is inserted;
• the recess (14) radially secures the Bowden cable sheath (5) in relation to the housing (2);
• the inserting means (12) surrounds the Bowden cable sheath (5) at least in places;
**characterized in that**
• the elevation is formed starting rising from an end of the aperture (15) and falling to the opposite end of the aperture (15), so that the elevation forms an incline.

2. Device (1) according to the previous claim, **characterized in that** the inserting means (12) is formed from a housing shape which prevents a form fit between the Bowden cable (3) and the aperture (15);

3. Device (1) according to claim 1, **characterized in that** the inserting means (12) is formed from a Bowden cable shape which prevents a form fit between the Bowden cable (3) and the aperture (15).

4. Device according to one of the previous claims, **characterized in that** the inserting means (12) is arranged at least partly on the circumference of the aperture (15).

5. Device (1) according to one of the previous claims, **characterized in that** the housing (2) is made of plastic, especially polyoxymethylene (POM), and the inserting means (12) is formed as a single component with the housing (2).

6. Device according to one of the previous claims, **characterized in that** the Bowden cable (3) has a Bowden cable sheath (5), whereby the flange (9) can be inserted into the mounting (11), at least partially.

7. Device according to the previous claim, **characterized in that** the housing (2) is formed at least in two parts and that the flange (9) can be fixed by means of a further housing part in the mounting (11).

## Revendications

1. Dispositif (1) d'immobilisation axiale d'une extrémité d'un câble Bowden (3), notamment une serrure de véhicule automobile, présentant
• un boîtier (2),
• un câble Bowden (3),
• un moyen d'introduction (12) du câble Bowden (3) dans le logement (11) de manière à pouvoir empêcher un montage erroné du câble Bowden (3) ;
sachant que
• le boîtier (2) présente un réceptacle (11) dans lequel l'extrémité du câble Bowden (3) peut être immobilisée,
• le boîtier (2) présente un orifice (15) permettant de recevoir un câble Bowden (3) ;
• le moyen d'introduction (12) présente une géométrie empêchant une adhérence des formes entre le câble Bowden (3) et l'orifice (15) ;
• l'orifice (15) dans le boîtier (2) est en forme de U et que le moyen d'introduction (12) est formé par une zone surélevée s'étendant le long de la circonférence ;
• la gaine (5) du câble Bowden comprend un collet (9) ;
• le logement (11) présente un évidement (14) dans lequel est introduit le collet (9) ;
• l'évidement (14) sert à la sécurisation radiale de la gaine (5) du câble Bowden par rapport au boîtier (2) ;
• le moyen d'introduction (12) entoure au moins localement la gaine (5) du câble Bowden ;
**caractérisé en ce que**
• la zone surélevée est configurée montante depuis une extrémité de l'orifice (15) et descendante vers l'extrémité opposée de l'orifice (15), de sorte que la zone surélevée forme un plan incliné.

2. Dispositif (1) selon la revendication précédente, **caractérisé en ce que** le moyen d'introduction (12) présente une géométrie de boîtier empêchant une adhérence des formes entre le câble Bowden (3) et l'orifice (15).

3. Dispositif (1) selon la revendication 1, **caractérisé en ce que** le moyen d'introduction (12) présente une géométrie de câble Bowden empêchant une adhérence des formes entre le câble Bowden (3) et l'orifice (15).

4. Dispositif selon l'une des revendications précédentes, **caractérisé en ce que** le moyen d'introduction (12) est disposé au moins localement sur la circonférence de l'orifice (15).

5. Dispositif (1) selon l'une des revendications précédentes, **caractérisé en ce que** le boîtier (2) est en matière plastique, notamment en polyoxyméthylène (POM) et que le moyen d'introduction (12) est configuré monobloc avec le boîtier (2).

6. Dispositif selon l'une des revendications précédentes, **caractérisé en ce que** le câble Bowden (3) présente une gaine (5) de câble Bowden, sachant que le collet (9) peut être introduit au moins localement dans le logement (11).

7. Dispositif selon la revendication précédente, **caractérisé en ce que** le boîtier (2) est configuré au moins en deux parties et que le collet (9) est immobilisable dans le logement (11) au moyen d'une pièce de boîtier supplémentaire.
